Europäisches Patentamt

European Patent Office

Office européen des brevets

(11) Veröffentlichungsnummer: **0 412 362 A2**

## (12) EUROPÄISCHE PATENTANMELDUNG

(21) Anmeldenummer: 90114332.1

(22) Anmeldetag: 26.07.90

(51) Int. Cl.5: **G11B 7/24**, G11B 7/00

(30) Priorität: 07.08.89 DE 3926060

(43) Veröffentlichungstag der Anmeldung:
13.02.91 Patentblatt 91/07

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Iselborn, Stefan, Dr.**
**Friedrichstrasse 164**
**D-6700 Ludwigshafen(DE)**
Erfinder: **Hibst, Hartmut, Dr.**
**Sternstrasse 215**
**D-6700 Ludwigshafen(DE)**
Erfinder: **Kuppelmaier, Harald, Dr.**
**In den Bannzaeunen 17**
**D-6701 Goennheim(DE)**

(54) Optisches Aufzeichnungsmedium.

(57) Die Erfindung betrifft ein optisches Aufzeichnungsmedium, im wesentlichen bestehend aus einem Substrat und einer darauf aufgebrachten Speicherschicht aus einer Ge-Te-Legierung, welche unter der Einwirkung eines Laserstrahls an den bestrahlten Stellen die optischen Eigenschaften der Speicherschicht verändernde Blasen ausbildet.

EP 0 412 362 A2

# OPTISCHES AUFZEICHNUNGSMEDIUM

Die Erfindung betrifft ein optisches Aufzeichnungsmedium, im wesentlichen bestehend aus einem Substrat und einer darauf aufgebrachten Speicherschicht, welche unter der Einwirkung eines Laserstrahls an den bestrahlten Stellen die optischen Eigenschaften der Speicherschicht verändernde Blasen ausbildet.

Zur optischen Aufzeichnung digitaler Information werden im einfachsten Falle dünne anorganische Schichten mit stark fokussierter Lichtstrahlung lokal auf eine so hohe Temperatur erhitzt, daß die Schicht an der beleuchteten Stelle durch Schmelzen, Verdampfen und andere physikalische Prozesse entfernt wird. Zum Lesen wird ein zweiter, weniger intensiver Lichtstrahl auf die Speicheroberfläche gerichtet und das reduzierte Reflexionsvermögen des gebildeten Loches erkannt. Dieses Verfahren wird häufig als Datenaufzeichnung durch Lochbildung bezeichnet. Für ein solches Speicherprinzip eignen sich insbesondere Materialien mit niederen Schmelztemperaturen und niederen Wärmeleitfähigkeiten wie beispielsweise Tellur, Wismut und deren Legierungen. So werden in der FR-A 2 420 188 Te-Ge-Legierungen beschrieben, welche besonders bei einem Ge-Gehalt von 22 At.-% lokale photothermisch induzierte Löcher der beschriebenen Art bilden. Hierzu gibt die JP-A 60 115 489 an, daß lochbildende Speichermaterialien durch eine Nachbehandlung, die den Kontaktwinkel mit Wasser auf mindestens 90° einstellt, ein verbessertes optisches Aufzeichnungsverhalten zeigen.

Nachteilig bei lochbildenden Speichermaterialien ist jedoch, daß sich das aus den Aufzeichnungsmarken entfernte Material an zufälligen Orten auf der Schichtoberfläche wieder anlagert. Dies führt zu lokalen Inhomogenitäten des Reflexionsvermögens, wodurch das Rauschen prinzipiell beschränkt bleibt.

Neben der optischen Informationsspeicherung durch Lochbildung in der Speicherschicht ist auch die Verwendung von sogenannten Phasenwechselmaterialien bekannt (u.a. EP-A 186 227). Bei diesen Phasenwechselmaterialien handelt es sich zumeist um Stoffe, welche bei Einwirkung energiereicher Strahlung eine Änderung der atomaren Struktur zeigen, z. B. eine Änderung von der amorphen in die kristalline Struktur. Die Information ist mit reduzierter Lichtintensität auslesbar, da die unterschiedlichen atomaren Strukturen, sogenannte Phasen, unterschiedliche optische Eigenschaften wie Reflexionsvermögen oder Transmission aufweisen. Ein Problem bei der Entwicklung dieser Phasenwechselmaterialien stellt das Realisieren von genügend kurzen Schaltzeiten dar. Schnelle Kristallisation und damit kurze Schaltzeiten beim Phasenwechsel von amorphen zum kristallinen Zustand ist nur bei hohen Temperaturen möglich, weshalb hohe Lichtintensitäten benötigt werden. (M. Chen et al., Appl. Phys. Lett. 49 (9), 502 ff (1986) zeigen, daß alle Te-Ge-Speicherschichten mit Ge-Anteilen bis zu 60 At.-% die gestellten Anforderungen an Schaltzeit und Empfindlichkeit nicht gleichzeitig erfüllen können. Außerdem sind, um den Phasenwechsel kristallin/amorph nutzen zu können, zusätzliche Schutz- oder Deckschichten notwendig, um die konkurrierende Lochbildung zu verhindern. Deshalb wird die Herstellung technisch aufwendiger.

Eine andere Variante der optischen Informationsaufzeichnung nutzt die Eigenschaften von einigen Materialien bei Beleuchtung mit energiereicher Lichtstrahlung Blasen oder sogenannte Pits, zu bilden. Am bekanntesten sind hier organische Verbindungen, z. B. einige Farbstoff-/Polymermischungen. Der Nachteil dieser Materialien liegt darin, daß sie nur in einem eng eingegrenzten Spektralbereich benutzt werden können. Außerdem ist ihre Stabilität beim Dauerlesen beschränkt.

Auch J. Cornet beschreibt in "Deformation Recording Process in Polymer-Metal Bilayers and its Use for Optical Storage", SPIE 420, 86 ff (1983) ein blasenbildendes Zweischichtensystem. Dabei besteht die erste Schicht aus einer 150 bis 300 nm dicken Polymerlage. Sie wird durch ein Aufschleuderverfahren auf ein durchsichtiges Substrat aufgebracht und darüber eine 15 nm dicke Edelmetallegierung durch Kathodenzerstäubung oder Vakuumverdampfung deponiert. Beim Belichten des Systems wird ein Teil der Polymerschicht verdampft, so daß durch den entstehenden Dampfdruck die Metallschicht irreversibel zu einer Blase verformt wird.

In der EP-A 0 130 329 B1 wird ein blasenbildendes Aufzeichnungsmedium angegeben, das aus drei aufeinanderfolgenden Schichten auf einem Substrat besteht: Die an das Substrat angrenzende Schicht besteht aus einem transparenten anorganischen Material. Danach folgen eine organische Schicht und eine anorganische blasenbildende Speicherschicht.

Nachteilig bei den beiden letztgenannten Speichermedien ist der Mehrschichtenaufbau und somit der mehrstufige Produktionsprozeß, da alle benötigten Schichten nacheinander hergestellt werden müssen.

Aufgabe der vorliegenden Erfindung war es daher, ein optisches Aufzeichnungsmedium bereitzustellen, dessen, unter der Einwirkung eines Laserstrahls Blasen bildenden, Speicherschicht ohne jede weitere Zwischenschicht unmittelbar auf den üblichen Trägermaterialien ausgebildet ist. Weiter war es Aufgabe der Erfindung, daß ein derart aufgebautes optisches Aufzeichnungsmedium über einen breiten Intensitätsbereich des eingestrahlten Lichtes stabile Blasen bildet und insbesondere auch resistent gegen den konkurrierenden Lochbildungsmechanismus ist.

Es wurde nun gefunden, daß sich die Aufgabe mit einem optischen Aufzeichnungsmedium, im wesentlichen bestehend aus einem Trägermaterial und einer darauf aufgebrachten Speicherschicht, welche unter der Einwirkung eines Laserstrahls an den bestrahlten Stellen die optischen Eigenschaften der Speicherschicht verändernde Blasen ausbildet, lösen läßt, wenn die Speicherschicht im wesentlichen aus einer thermodynamisch metastabilen Legierung der Zusammensetzung $GeTe_x$ mit Werten für X von 1,8 bis 2,2 besteht und eine Schichtdicke zwischen 10 und 100 nm aufweist.

In einer vorteilhaften Ausgestaltung der erfindungsgemäßen optischen Aufzeichnungsmedien besteht die Speicherschicht aus einer $GeTe_2$-Legierung. Gegebenenfalls lassen sich noch weitere Elemente zulegieren. So kann es aus Gründen der Korrosionsstabilität angebracht sein, geringe, 10 At.% nicht übersteigende Mengen an Selen in die Speicherschicht einzubauen. Unter den möglichen amorphen Ge-Te-Legierungen sind solche der zusammensetzung $GeTe_x$ (X = 1,8 - 2,2) dadurch ausgezeichnet, daß sie eine chemisch geordnete, amorphe oder eine thermodynamische metastabile kristalline Struktur ausbilden können, bei der jedes Te-Atom nur Ge-Nachbarn hat und umgekehrt. Eine solche Struktur ist jedoch nur bei geringen Schichtdicken existent (Tsunemoto et al. J. Phys. Soc. Jap. 56, 3396-97 (1987)).

Die Herstellung der derart ausgebildeten Speicherschicht läßt sich in bekannter Weise durch physikalische Gasphasenabscheidung in der geforderten Schichtdicke zwischen 10 und 100 nm, vorzugsweise 30 bis 70 nm auf dem Trägermaterial bewerkstelligen. Bewährt hat sich hierbei die Herstellung der Schichten durch Kathodenzerstäubung aus einem Ge-Te-Target, wobei die chemische Zusammensetzung der Schicht durch die chemische zusammensetzung des Targets kontrolliert wird. Vor der eigentlichen Abscheidung muß ein Vakuum besser als $10^{-5}$ mbar eingestellt werden, um eine Kontamination der Schichten durch Fremdgase zu verhindern. Das Substrat muß chemisch gereinigt werden, um eine gute Haftung der Schicht zu sichern.

Auf diese Weise lassen sich die speziellen Speicherschichten auf die bei optischen Aufzeichnungsmedien im allgemeinen eingesetzten Trägermaterialien, wie beispielsweise aus Polycarbonat oder Polymethylmethacrylat, aufbringen. Diese Trägermaterialien können auch bereits Servoinformationen zu Spurlage und Sektoreneinteilung, wie bei ähnlichen Datenaufzeichnungsmedium üblich, enthalten. Dabei kann es angebracht sein, diese Substrate vor dem direkten Aufbringen der Ge-Te-Speicherschicht mittels Sputterätzen vorzubehandeln.

Diese erfindungsgemäß gekennzeichneten optischen Aufzeichnungsmedien zeichnen sich dadurch aus, daß sie dich in einfacher Weise ohne einen komplizierten Schichtenaufbau herstellen lassen und sich in einem breiten intensitätsbereich des eingestrahlten Lichtes die die Informationen wiedergebenden Blasen stabil ausbilden lassen. Weiterhin zeigt dieses Aufzeichnungsmedium ein hohes Reflexionsvermögen von über 20 und deshalb ein hohes Signal/Rausch-Verhältnis (CNR). Es weist über das gesamte sichtbare und nah infrarote Licht hinweg eine ausreichende Absorption auf und kann deshalb weitgehend unabhängig von der eingestrahlten Lichtwellenlänge benutzt werden.

Die Erfindung sei anhand des folgenden Beispiels näher erläutert:

Ein 1,2 mm dickes Polycarbonatsubstrat mit Spurrillen wird in eine Sputteranlage eingeschleust. Vor Beginn des Sputterns wird das Substrat 1 min lang mit einer Biasleistung von 50 W im Argongas mit dem Druck p = 5 x $10^{-3}$ mbar angeätzt. Anschließend wird im RF-Dioden-Mode eine 50 nm dicke Te-Ge-Schicht auf das Substrat aufgebracht. Das Sputtertarget besteht aus einer Reintellurplatte mit aufgelegten Ge-Scheibchen. Die Anzahl der Scheibchen bestimmt die zusammensetzung der Schicht. Werden so viele Scheibchen aufgelegt, daß die Schicht durch die Formel $Te_2Ge$ beschrieben werden kann, so läßt sich der Blasenbildungsmechanismus feststellen. In einem optischen Laufwerk wurde mit einem Halbleiterlaser der Wellenlänge 830 nm und einem Strahldurchmesser von $10^{-6}$ m bei einer Aufzeichnungsfrequenz von 3,7 MHz Daten eingeschrieben. Bei Laserleistungen von 5 - 8 mW auf dem Medium werden Werte CNR > 40 dB bei einer Bandbreite von 30 kHz ausgelesen.

## Ansprüche

Optisches Aufzeichnungsmedium, im wesentlichen bestehend aus einem Trägermaterial und einer darauf aufgebrachten Speicherschicht, welche unter der Einwirkung eines Laserstrahls an den bestrahlten Stellen die optischen Eigenschaften der Speicherschicht verändernde Blasen ausbildet, dadurch gekennzeichnet, daß die Speicherschicht im wesentlichen aus einer thermodynamisch metastabilen Legierung der Zusammensetzung $GeTe_x$ mit Werten für X von 1,8 bis 2,2 besteht und eine Schichtdicke zwischen 10 und 100 nm aufweist.